# EUROPEAN PATENT APPLICATION

(11) **EP 4 044 300 A1**
(43) Date of publication of application: **17.08.2022**
(21) Application number: 21157492.6
(22) Date of filing: 16.02.2021
(51) Int. Cl.: H01M 8/04007, H01M 8/0432, H01M 8/04746, H01M 8/2475, H01M 8/124

(54) **FUEL CELL SYSTEM**

(71) Applicant: ECOLE POLYTECHNIQUE FEDERALE DE LAUSANNE (EPFL), 1015 Lausanne (CH)
(72) Inventor: Hadad, Mahmoud, 1004 Lausanne (CH)
(74) Representative: Linhart, Friedrich Karl Eberhard

(57) **Abstract**

In a fuel cell system comprising a first zone (1) and a second zone (2), wherein the first zone (1) comprises a reaction area (4), wherein the second zone (2) comprises a fluidic connection (6, 7), wherein the fuel cell system comprises a decoupling structure (3) located between the first zone (1) and the second zone (2), wherein the decoupling structure (3) is configured to achieve an at least partial thermal decoupling between the first zone (1) and the second zone (2), the fuel cell system is configured to maintain a temperature of the first zone (1) essentially stable during an operation of the fuel cell system.

## Description

### Technical Field

The invention relates to a fuel cell system according to the preamble of claim 1. The invention furthermore relates to a method for manufacturing a fuel cell system according to claim 12, a method for regulating an operating temperature of a fuel cell system according to claim 13, a computer programme according to claim 14 and a computer-readable medium according to claim 15.

### Background Art

The developments over the last few years have shown that alternative ways to supply machines and devices with electricity have to be found in order to cope with the challenges imposed by climate change. One technology that is particularly promising for clean energy supply is the fuel cell technology. Fuel cell technology has evolved considerably over the last years - the field of fuel cells can be considered a field with constant evolution. However, in order to make the fuel cell technology interesting for a large number of technical applications, the variety of existing fuel cell system assemblies is not sufficient and should be increased. For example, for small-scale appliances and/or portable applications, small fuel cell systems are needed. In general, miniaturization of fuel cell systems can be considered to be one challenge in the field for the future. At the same time, fuel cell systems should have a good efficiency, user-friendliness, reliability and lifetime in order to really be considered as alternatives for energy supply, for example compared to batteries.

In general, the currently available fuel cell systems have the disadvantages that they are often too large and bulky, that they often have a trade-off between power output and system weight and/or system volume that does not meet the requirements for a widespread use, especially in the case of hight-temperature fuel cells and that especially smaller hight-temperature fuel cells do often not have a good reliability and user-friendliness.

### Problem to be Solved

It is the object of the invention to solve or to at least diminish at least some of the above-mentioned disadvantages.

### Solution to the Problem

This problem is solved by a fuel cell system comprising a first zone and a second zone, wherein the first zone comprises a reaction area, wherein the second zone comprises a fluidic connection, wherein the fuel cell system comprises a decoupling structure located between the first zone and the second zone and configured to achieve an at least partial thermal decoupling between the first zone and the second zone, wherein the fuel cell system is configured to maintain a temperature of the first zone essentially stable during an operation of the fuel cell system.

In this context, the expression "reaction area" refers to that portion of a fuel cell system or a fuel cell, in which a chemical reaction, for example a reaction between a fuel and an oxidising agent, is carried out, thereby converting chemical energy into electrical energy. In typical embodiments, the reaction area comprises a fuel cell membrane. A membrane is, however, not absolutely necessary, since the fuel cell system can in principle also be a membrane-less fuel cell system. The expression "fluidic connection" is in particular referring to a part of the fuel cell system which is configured in such a way that fluids (for example liquids, gases or air) can be fed into it and/or fluids can be ejected out of it.

The expression "essentially", when used in this specification and in the claims, is typically to be understood such that certain deviations are acceptable. For example, an "essentially stable temperature" can in typical embodiments be understood as referring to a temperature with ±20% of variations, preferably ±10% of variations, more preferably ±5% of variations being considered acceptable.

The "first zone" can also be referred to as "hot zone". The "second zone" can also be referred to as "cold zone".

Such a fuel cell system solves the above-mentioned problem because the fact that the first zone, which comprises the reaction area, is kept at an essentially stable temperature improves the reliability of the fuel cell system. Furthermore, the fact that the first zone and the second zone are thermally decoupled by means of the decoupling structure makes it possible to concentrate an insulation effort on the first zone, leading to a comparably small fuel cell system and at the same time reducing thermal stress on the zones and its components, thereby further improving the reliability of the fuel cell system.

In typical embodiments, the fuel cell system is configured to keep the second zone, in particular the fluidic connection, under 150°C, preferably under 85°C, more preferably approximately at ambient temperature during the operation of the fuel cell system. Throughout this specification, the expression "approximately" shall be understood as referring to a tolerance of ±20%, preferably ±10%. In typical embodiments, "ambient temperature" shall mean "the temperature of the environment in which the fuel cell system is currently used". One advantage of keeping the second zone at such temperatures is that standard connection, for example standard fluidic connections and/or standard electric connections, can be used in the second zone without risking a lifetime reduction of these components due to high temperature. Furthermore, the fact that the second zone is kept at such temperatures can have the advantage that user can touch the fuel cell system in the second zone, at least temporarily, without encountering a risk of being severely burnt, for example when replacing or servicing the fuel cell system. This corresponds to an improved user-friendliness of the fuel cell system.

In typical embodiments, the fuel cell system comprises a temperature control means, wherein the temperature control means is configured in such a way, that it can keep the temperature of the first zone essentially stable, preferably at a desired operation temperature, during the operation of the fuel cell system, wherein the temperature control means is preferably furthermore configured such that it cannot actively influence a temperature of the second zone during the operation of the fuel cell system. The expression "cannot actively influence a temperature of the second zone" is to be understood such that an operation of the temperature control means does not considerably influence the temperature of the second zone. The fact that the effort of keeping the temperature stable is concentrated on the first zone in this manner makes it possible to reduce the size of the fuel cell system. Furthermore, the fact that the effort of keeping the temperature stable is concentrated on the first zone in this manner has the advantage that keeping the second zone at ambient temperature becomes comparably easy because this temperature is not actively influenced by the temperature control means. A temperature control means configured in the described way can therefore have a synergistic effect.

In some embodiments, the fuel cell system is portable, wherein the fuel cell system preferably has a mass of less than 5 kg, more preferable less than 2 kg, even more preferably less than 1 kg, even more preferably less than 500 g. Such masses are advantageous for portable applications, but it is also possible for the fuel cell system to have a higher mass, for example 6 kg or more.

In typical embodiments, the fuel cell system comprises a vacuum housing, wherein the first zone is preferably at least partly encapsulated in the vacuum housing and/or wherein the decoupling structure is preferably at least partly encapsulated in the vacuum housing and/or wherein the second zone is preferably located outside the vacuum housing. The expression "vacuum housing" is to be understood such that it is configured in such a way that an under-pressure can be created in its inside compared to its outside. It does not necessarily mean that a perfect vacuum can be created in its inside.

In typical embodiments, the vacuum housing has a volume between 50 cm³ and 1000 cm³. In typical embodiments, the vacuum housing has a single-wall design or a double-wall design. "Double-wall design" means that the vacuum housing comprises an inner wall and an outer wall. In typical embodiments, the vacuum housing has more than two walls, for example in a triple-wall design. In typical embodiments, the vacuum housing and/or the inner wall and/or the outer wall has/have a wall thickness between 1 mm and 8 mm, preferably between 1 mm and 4 mm, more preferably between 1 mm and 3 mm, more preferably between 1 mm and 2 mm.

In typical embodiments, the fuel cell system, preferably the vacuum housing, comprises a reflective coating. The reflective coating preferably comprises a metal coating, preferably a silver coating. In typical embodiments, the reflective coating comprises a combination of different superimposed layers, typically alternating layers of high and low refractive index. In preferred embodiments, the layers of high refractive index have a refractive index between 1.2 and 1.6. In preferred embodiments, the layers of low refractive index have a refractive index between 1 and 1.3. The reflective coating is typically arranged at least on an inside of the vacuum housing. In a typical embodiment, especially in a single-wall design, the wall of the vacuum housing comprises a reflective coating on its inside and/or a reflective coating is arranged around the first zone and/or the decoupling structure. In typical embodiments of the fuel cell system with double-wall design, both walls of the vacuum housing comprise a reflective coating, preferably on their respective insides. In typical embodiments, the vacuum housing is made from glass or from one or more material(s) having glass-like properties, for example materials with thermal expansion coefficients between 8 ppm/K and 12 ppm/K.

In typical embodiments, the fuel cell system comprises a glass sealing, wherein the glass sealing is preferably different from the vacuum housing. In typical embodiments, the glass sealing is arranged around the first zone and/or the decoupling structure and/or at least partly around the second zone. Such a glass sealing has the advantage of hermetically sealing the reaction area of the fuel cell system. In certain embodiments, the glass sealing is created as follows: a glass sealing component is mixed with a binder at room temperature, for example at approximately 20°C. The resulting mixture is then applied to the part(s) of the fuel cell sys that is/are to be sealed. Then, the mixture is dried and sintered at a temperature higher than the system's typical utilization temperature (typically at approximately 750°C or at approximately 850°C) to liquefy the glass sealing component and to create a convenient joint.

In typical embodiments, the fuel cell system comprises a control system configured to modulate a power output of the fuel cell system and/or to modulate a temperature of the fuel cell system, especially of the first zone, and/or to modulate a pressure inside the vacuum housing. Such a control system has the advantage that it can help in maintaining a good efficiency of the fuel cell system during operation because different operation parameters, which typically influence each other, can be controlled during operation and it can also increase the reliability of the system, for example because it can help to keep the first zone at a desired temperature during operation and also to keep a temperature gradient between the first zone and the second zone in an acceptable in range and thereby reduce thermal stress on system components.. Such a control system is, however, not absolutely mandatory. For example, some embodiments may only comprise a vacuum housing for maintaining the temperature of the first zone essentially stable during operation of the fuel cell system.

In typical embodiments, the control system is configured to control the temperature of the first zone. By being able to control the temperature of the first zone, the efficiency of the fuel cell system in operation can be controlled in a convenient manner. In typical embodiments, the control system comprises a temperature sensor and/or a pressure sensor, wherein the sensor(s) is/are typically located inside the vacuum housing, preferably in or at least near the first zone.

In typical embodiments, the control system is configured to ensure that an essentially constant electrical power is drawn from the fuel cell system, in particular from a fuel cell portion of the fuel cell system, wherein the fuel cell portion comprises the reaction area, and/or the control system is configured to adapt a fluid intake of the fuel cell system to an electrical power output of the fuel cell system, and/or the control system is configured to adapt a pressure inside the vacuum housing to an ambient temperature and/or to a current heat generation of the fuel cell portion and/or of the fuel cell system. In this context, the expression "fuel cell portion" is to be understood such that it relates to the actual fuel cell inside the fuel cell system. In typical embodiments, the fuel cell portion comprises a membrane and/or an anode and/or a cathode and/or a conductive grid and/or a heating unit and/or a gas processing unit and/or an interconnect material. In general, the expression "fuel cell portion" relates to the actual fuel cell part of the fuel cell system, in which the electrochemical reaction is taking place, and typically excludes any periphery of the actual fuel cell. In typical embodiments, the fuel cell portion is or comprises a Solid Oxide Fuel Cell (SOFC). In particular embodiments, the fuel cell portion is or comprises a Solid Oxide Fuel Cell (SOFC) stack. In typical embodiments, the fuel cell portion comprises an air chamber and/or a fuel cell membrane and/or a gas reformer. In preferred embodiments, the gas reformer is configured to crack any hydrocarbon-based compound into more suitable components such as CO and H₂. In typical embodiments, the gas reformer is configured to crack at least 80%, preferably at least 90%, more preferably at least 95% of a hydrocarbon-based compound that reaches the gas reformer. In preferred embodiments, the fuel cell portion comprises a heater preferably configured for heating the first zone, typically a resistive heater, and/or a post-combustor. The post-combustor is typically configured to process unused CO and H₂ into CO₂ - or in other words: oxidize remaining unused fuel. In typical embodiments, the post-combustor is configured to oxidize at least 90%, preferably at least 95%, more preferably at least 99% of an unused fuel that reaches the post-combustor.

In typical embodiments, the fuel cell portion of the fuel cell system comprises a fuel cell as described in the international patent application WO 2020/044321 A1, and in particular a fuel cell as shown in Figures 1.7 and 1.8 of WO 2020/044321 A1 and in Figure 4 of WO 2020/044321 A1. In typical embodiments, the fuel cell portion at least partly comprises a heating unit and/or a gas processing unit as described in WO 2020/044321 A1 and especially as shown in Figure 3 of WO 2020/044321 A1. These figures of WO 2020/044321 A1, as well as the corresponding parts of the claims and specification of WO 2020/044321 A1, are hereby incorporated by reference into the present patent application. Furthermore, the entire content of WO 2020/044321 A1 is hereby incorporated by reference into the present patent application.

In typical embodiments, the control system comprises a general controller, also referred to as main controller. The general controller typically comprises a central processing unit or any other computation means configured to put in place the control mechanisms needed for controlling the fuel cell system. In typical embodiments, the control system comprises an air regulator and/or a fuel regulator and/or a heat regulator and/or a battery controller. In typical embodiments, one or more of the regulators and/or the controllers is/are implemented by means of computer programme code.

In typical embodiments, the second zone comprises an electrical connection, wherein the electrical connection preferably comprises a positive potential port and a negative potential port. In typical embodiments, the fluidic connection comprises an air-and-gas inlet and/or an air outlet. In typical embodiments, the electrical connection and the fluidic connection are preferably located next to each other, preferably facing away from the decoupling structure and the first zone. Such an arrangement of the electrical connection and the fluidic connection has the advantage of putting a maximum space between the first zone and these connections, thereby making it easier to achieve a thermal decoupling between these connections and the first zone. In typical embodiments, the expression "air" refers to air as such but also to appropriate air/gas combinations or yet to pure oxygen. The "air outlet" can also be referred to as "exhaust".

In typical embodiments, the vacuum housing comprises a pressure control outlet, through which a pressure inside the vacuum can be controlled. In typical embodiments, the pressure control outlet is significantly smaller than a main part of the vacuum housing and/or the pressure control outlet has a pointed form. Such a form of the pressure control outlet is advantageous because it facilitates a connection of a pump to the vacuum housing.

In typical embodiments, the fuel cell system is configured in such a way that a pump system can be connected to the fuel cell system, in particular to the vacuum housing, for controlling the pressure inside the vacuum housing, wherein the pressure control outlet is preferably configured in such a way that the pump system can be connected to the pressure control outlet. In typical embodiments, the fuel cell system comprises a vacuum pump configured to control the pressure inside the vacuum housing, in particular configured to decrease and/or to increase the pressure inside the vacuum housing. Such a possibility to control the pressure inside the vacuum housing is particularly advantageous because by regulating the pressure, it becomes possible to indirectly regulate the temperature of the fuel cell portion and/or the reaction area of the fuel cell system, particularly such that the temperature fuel cell portion and/or the reaction area is kept essentially stable. This can have a positive impact on the reliability and/or mechanical stability and/or lifetime of the fuel cell system. In other words: by being able to adapt the pressure inside the vacuum housing to the current working conditions of the fuel cell system at a given moment of time, it becomes easier to keep the working temperature of the first zone stable and to thereby maintain a good reliability and/or mechanical stability and/or lifetime of the fuel cell system. In typical embodiments, the vacuum pump is configured to adjust the pressure inside the vacuum housing depending on an outside temperature of the vacuum housing.

In typical embodiments, the vacuum housing is fixed to the second zone and/or to the decoupling structure. In typical embodiments, the vacuum housing is fixed to the second zone and/or the decoupling structure indirectly, in particular by means of a closure plate and/or a sealing ring, in particular a glass sealing ring. In typical embodiments, the closure plate is made from a glass/ceramic composite, for example a glass/ceramic composite comprising a fluorphlogopite mica in a borosilicate glass matrix. In typical embodiments, the closure plate and/or the glass sealing ring is/are created using a glass sealing component and a binder as explained above for the creation of the glass sealing. Fixing the vacuum housing to the second zone and/or the decoupling structure has the advantage of minimising heat loss through conduction from the first zone to other components of the fuel cell system. Furthermore, it has the advantage of giving the first zone the possibility to expand inside the vacuum housing without creating constraints on the vacuum housing. In typical embodiments, the vacuum housing is not fixed to the first zone, at least not directly. In typical embodiments, the vacuum housing is fixed indirectly to the first zone, in particular via the second zone and/or the decoupling structure.

In typical embodiments, the first zone and/or the second zone and/or the decoupling structure and/or the vacuum housing and/or any other component of the fuel cell system and/or the entire fuel cell system is/are made essentially exclusively of materials with thermal expansion coefficients between 8 ppm/K and 12 ppm/K. The inventors have found through experiments that materials with such thermal expansion coefficients are particularly adapted for fuel cell applications, in particular because they can lead to a good thermal stability of the overall fuel cell system, and in particular help to keep a temperature inside the first zone essentially stable. In typical embodiments, at least all main components of the fuel cell system, such as for example the components explicitly mentioned above, have at least essentially the same thermal expansion coefficient and/or are made from the same material. In this context, the expression "essentially" means that certain deviations/exceptions are acceptable as long as they do not considerably change the behaviour of the overall fuel cell system.

In typical embodiments, the first zone, the decoupling structure and the second zone together form a main body of the fuel cell system, wherein the main body typically has a beam-shape form, and/or the decoupling structure comprises a bridge connection, wherein the bridge connection typically comprises a multitude of bridge strips, wherein an effective width of the bridge connections equals 1 to 50%, preferably 1 to 30%, more preferably 1 to 20% of a (maximum) width of the main body of the fuel cell, and/or the decoupling structure comprises a multitude of embedded microfluidic channels passing through the decoupling structure, preferably through the bridge connection, from the first zone to the second zone, wherein each channel typically has a width between 0,05 mm and 10 mm, preferably between 0,1 mm and 5 mm, more preferably between 0.1 mm and 2 mm. The inventors have found that such dimensions are particularly advantageous for achieving a good trade-off between efficiency and miniaturisation of the fuel cell system.

In typical embodiments, the temperature control means at least partly comprises the vacuum housing and/or the decoupling structure and/or the reflective coating and/or the glass sealing and/or the control system and/or the vacuum pump and/or the pump system and/or any other part of the fuel cell system which has an influence on the temperature of the first zone and/or has an influence on a temperature distribution within the fuel cell system.

A method for manufacturing a fuel cell system according to any of the previously presented embodiments comprises the steps:
- placing a main body comprising the first zone, the second zone and the decoupling structure at least partly inside a vacuum housing,
- connecting the vacuum housing to the main body by means of a closure plate and/or a sealing ring, and
- closing a pressure control outlet of the vacuum housing either by arranging a vacuum pump on it or by heating it up such that an outlet closure tip is formed.

In typical embodiments, air is sucked out of the vacuum housing before closing the pressure control outlet in order to create an under-pressure inside the vacuum housing. In typical embodiments, the heating up is being done by means of a heat torche.

A method for regulating an operating temperature of a fuel cell system, preferably a fuel cell system according to any of the previously explained embodiments, comprises a process of temperature control, wherein the process of temperature control preferably comprises an air regulation process and/or a fuel regulation process and/or a pressure regulation process and/or an energy production regulation process and/or an energy storage process and/or a gas flow regulation process. In typical embodiments, one or more of these processes is/are implemented by computer programme code.

A computer programme comprises, in a typical embodiment of the invention, instructions which, when the programme is executed by a computer, cause the computer to carry out a method according to any of the above-mentioned embodiments. The expression "computer" is to be understood as referring to any device or structure that is able to execute the instructions. The computer programme can also be referred to as computer programme product.

A computer-readable medium comprises, in an embodiment of the invention, computer programme code for carrying out a method according to any of the above-mentioned embodiments and/or comprises a computer programme according to the above-mentioned embodiment. The expression "computer-readable medium" can be understood as referring in particular but not exclusively to hard disks and/or servers and/or memory sticks and/or flash drives and/or DVDs and/or blu-rays and/or CDs. Furthermore, the expression "computer-readable medium" can also refer to a data stream which is for example established when a computer programme and/or a computer programme product is downloaded from the internet.

### Short description of Figures

In the following, the invention is described in detail by means of drawings, wherein show:
Figure 1: a schematic sectional view of a fuel cell system according to one preferred embodiment,
Figure 2: another preferred embodiment of a fuel cell system in a schematic sectional view,
Figure 3: another schematic sectional view of a preferred embodiment of a fuel cell system,
Figure 4: a schematic block diagram of a fuel cell system according to one preferred embodiment,
Figure 5: another schematic block diagram of a preferred embodiment of the fuel cell system,
Figure 6: a schematic block diagram of another preferred embodiment of the fuel cell system, and
Figure 7: a schematic block diagram of another preferred embodiment of the fuel cell system.

### Description of Preferred Embodiments

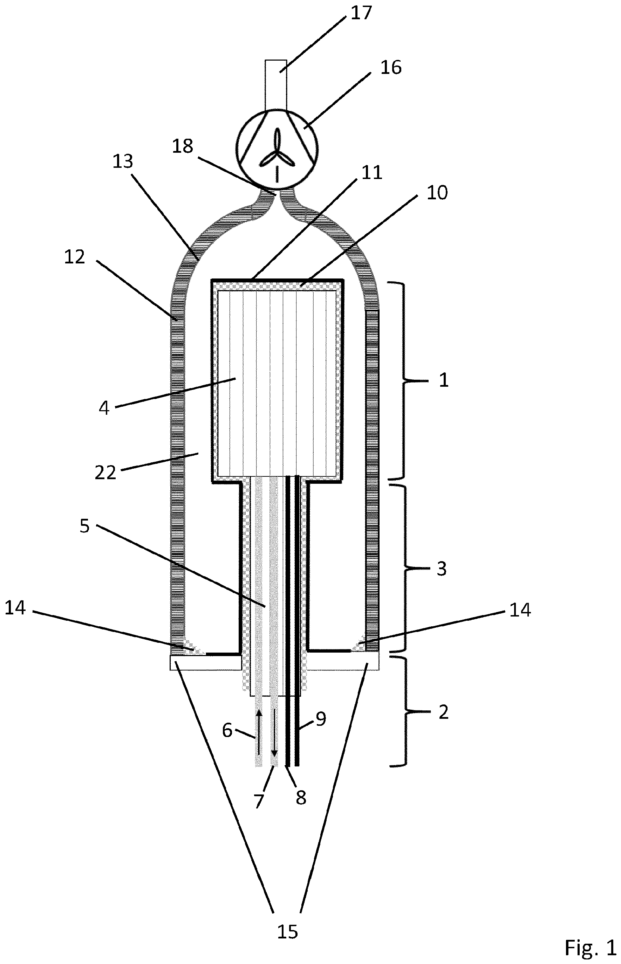

Figure 1 shows a schematic sectional view of a fuel cell system according to one preferred embodiment. The fuel cell system comprises a first zone 1 and a second zone 2. The first zone 1 comprises a fuel cell portion 4 of the fuel cell system. The fuel cell portion 4 can also be referred to as reaction area. The fuel cell portion 4 can be considered the actual fuel cell in the fuel cell system, in particular the part in which the electrochemical reaction which transforms chemical energy into electrical energy is taking place. The second zone 2 comprises a fluidic connection which comprises an air-and-gas inlet 6 as well as an air outlet 7. The second zone 2 further comprises an electrical connection which comprises a positive potential port 8 and a negative potential port 9. The fuel cell system furthermore comprises a decoupling structure 3 located between the first zone 1 and the second zone 2. The decoupling structure 3 comprises a bridge connection 5, which connects the first zone 1 to the second zone 2 while putting a certain distance between them. The bridge connection 5 comprises two fluid channels which link the fluidic connection in the second zone 2 to the fuel cell portion 4. In other embodiments, the bridge connection can comprise more than two fluid channels, for example four fluid channels. The bridge connection 5 further comprises two electric lines which link the fuel cell portion 4 to the positive potential port 8 and the negative potential port 9. The first zone 1 can also be referred to as hot zone and the second zone 2 can also be referred to as cold zone. By putting a certain distance between the hot zone and the cold zone, the decoupling structure 3, in particular the bridge connection 5, achieves a thermal decoupling between the first zone 1 and the second zone 2.

The fuel cell system furthermore comprises a vacuum housing 12. The vacuum housing 12 has the form of a rotational symmetric body, in particular the form of a cylinder-like body. In some embodiments, the vacuum housing is bell-shaped. At a top end of the vacuum housing 12 is arranged a pressure control outlet 18, which has the form of a narrow channel. In particular, a diameter of this narrow channel is approximately twenty times smaller than a diameter of a main body of the vacuum housing 12. Connected to this pressure control outlet 18 is a vacuum pump 16. To the vacuum pump 16 is further connected a vacuum hose 17. The vacuum pump 16 can be used to depressurise a vacuum chamber 22 present between the vacuum housing 12 on one hand and the combination of the fuel cell portion 4 and the bridge connection 5 on the other hand.

On its inside, the vacuum housing 12 is coated with a reflective coating 13. In typical embodiments, this reflective coating 13 is a metal coating, for example a metal coating comprising silver. The fuel cell portion 4 and the bridge connection 5 are encapsulated in a glass sealing 10. The glass sealing 10 hermetically seals the fuel cell portion 4 and the bridge connection 5 such that no gas can leak out of these components into the vacuum chamber 22. The glass sealing 10 is itself surrounded by a reflective coating 11. This reflective coating 11 can in principle be made of the same material as the reflective coating 13, but it can also have another composition. The combination of the fuel cell portion 4, the bridge connection 5 as well as the fluidic connection and the electrical connection is typically referred to as the "main body" of the fuel cell system. The expressions "first zone 1", "second zone 2" and "decoupling structure 3" typically refer to the main body of the fuel cell system and to the glass sealing 10 and the reflective coating 11, which at least partly surround the main body. These expressions do normally not include the vacuum housing 12 as well as the rest of the components shown in Figure 1.

The fuel cell system depicted in Figure 1 furthermore shows a closure plate 15, which has the form of a circular plate with a hole or slit in the middle. The closure plate 15 is connected to the vacuum housing 12 by means of a sealing ring 14. In typical embodiments, the sealing ring 14 and the glass sealing 10 are made from the same material, for example glass. In principle the closure plate could also have another form, for example oval or rectangular or another geometrical form.

The functioning of the fuel cell system shown in Figure 1 is as follows: Air and gas enters the fuel cell system through the air-and-gas inlet 6. It is carried to the fuel cell portion/reaction area 4 where it undergoes an electrochemical reaction which results in an electric potential. This electric potential is made accessible through the positive potential port 8 and the negative potential port 9. Reacted gas by the fuel cell is fed out of the fuel cell system through the air outlet 7. For the electrochemical reaction in the fuel cell portion/reaction area 4 to be carried out at good efficiency, it is advantageous if a temperature of the fuel cell portion/reaction area 4 is kept at a high level (for example between 500°C and 1000°C, for example approximately 650 °C) and in general as stable as possible. The bridge connection 5, which achieves a thermal decoupling between first zone 1 comprising the fuel cell portion/reaction area 4 on one hand and the second zone 2 on the other hand, helps to stabilise the temperature of the fuel cell portion/reaction area 4. Further stabilisation of this temperature is achieved by the glass sealing 10 and the reflective coating 11 of the main body of the fuel cell system. A further stabilisation of this temperature is achieved by the vacuum chamber 22 and the vacuum housing 12. Furthermore, the pressure inside the vacuum chamber 22 can be adapted during the operation of the fuel cell portion/reaction area 4 by means of the vacuum pump 16. In particular, air inside the vacuum chamber 22 can be sucked away by the vacuum pump 16 and evacuated through the vacuum hose 17, if necessary.

The fuel cell system in Figure 1 can furthermore comprise a control system configured to for example control the power drawn from the electrical connection and/or the feeding of gas and air into the fuel cell system and/or the operation of the vacuum pump 16. This control system is, however, not shown in Figure 1. The fuel cell system can furthermore comprise different sensors, such as for example a temperature sensor and/or a pressure sensor. Such sensors are typically configured to sense the temperature and/or the pressure inside the vacuum chamber 22, in particular in or near the first zone 1. Such sensors are, however, also not explicitly shown in Figure 1.

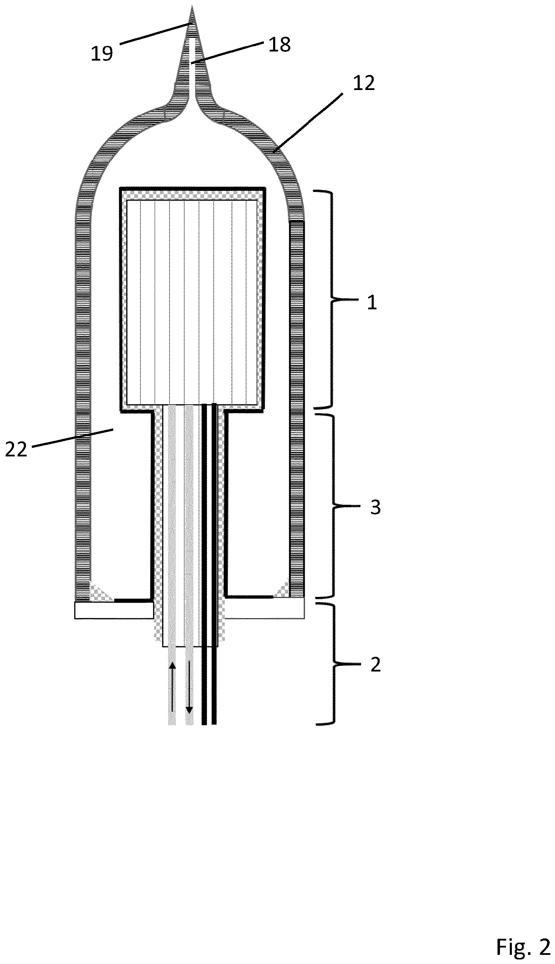

Figure 2 shows another preferred embodiment of a fuel cell system in a schematic sectional view. The fuel cell system shown in Figure 2 almost exactly corresponds to the embodiment shown in Figure 1. In particular, the embodiment shown in Figure 2 for example also comprises a first zone 1, a second zone 2 and a decoupling structure 3 as well as a vacuum housing 12. However, instead of being connected to a vacuum pump, the pressure control outlet 18 is simply closed by means of an outlet closure tip 19. One has to imagine that when fabricating the fuel cell system shown in Figure 2, the main body of the fuel cell system is first of all placed inside the cylinder-like vacuum housing 12. At that time, the pressure control outlet 18 is still open. Air is then sucked out of the vacuum chamber 22 in order to create a negative pressure (compared to the prevailing atmospheric pressure) inside the vacuum chamber 22. When a sufficient negative pressure has been created, the top portion of the pressure control outlet 18 is heated, thereby melting the material from which the vacuum housing 12 is made and thus creating the pointed outlet closure tip 19.

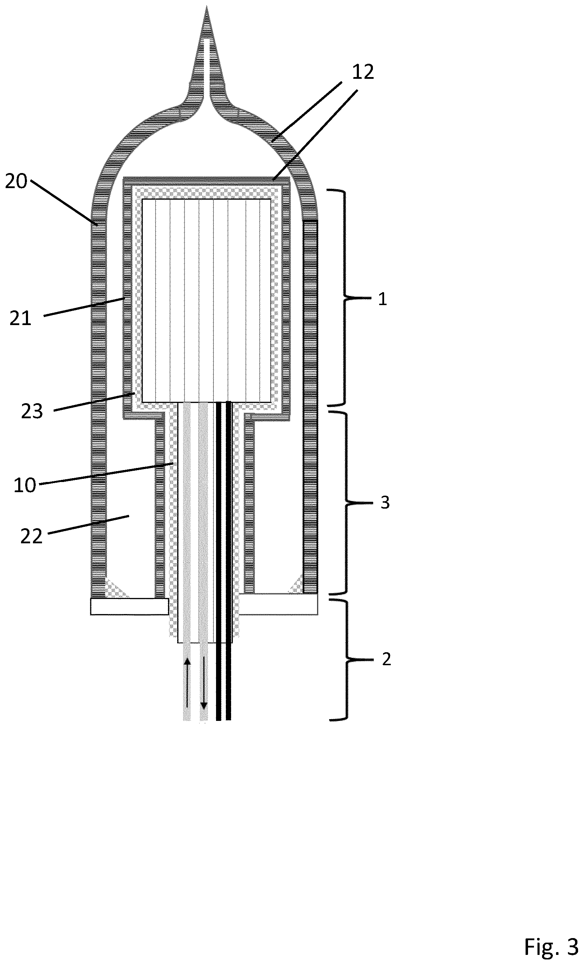

Figure 3 now shows another schematic sectional view of a preferred embodiment of a fuel cell system. The embodiment shown in Figure 3 is an embodiment with a double-wall design. The fuel cell system once more comprises a first zone 1 and a second zone 2 which are connected by means of a decoupling structure 3 in between them. The fuel cell system in Figure 3 also comprises a vacuum housing 12. The main difference between the embodiments in Figure 1 and 2 on one hand and the present embodiment in Figure 3 on the other hand is that the vacuum housing 12 comprises two walls, namely an outer wall 20 and an inner wall 21. The outer wall 20 corresponds to the vacuum housing 12 shown in Figure 2. The inner wall 21 surrounds the part of the main body of the fuel cell system which is located inside the vacuum chamber 22. Between the glass sealing 10 and the inner wall 21 there is an additional chamber 23. Furthermore, the outer wall 20 as well as the inner wall 21 each have a reflective coating on their respective insides. This reflective coating is, however, not explicitly shown in Figure 3 for reasons of simplicity. In some embodiments, the fuel cell system comprises a vacuum pump and/or a pressure sensor for adapting the pressure inside the vacuum chamber 22.

In typical embodiments, the fuel cell portion 4 and/or the bridge connection 5 and/or the air-and-gas inlet 6 and/or the air outlet 7 and/or the positive potential port 8 and/or the negative potential port 9 and/or the glass sealing 10 and/or the vacuum housing 12 and/or the sealing ring 14 and/or the closure plate 15 and/or the vacuum pump 16 and/or the vacuum hose 17 and/or the pressure control outlet 18 and/or the outlet closure tip 19 and/or the outer wall 20 and/or the inner wall 21 comprise(s) a glass/ceramic composite or glass cement and/or is/are at least partly made from a glass/ceramic composite or glass cement.

In typical embodiments, the glass/ceramic composite comprises a fluorphlogopite mica in a borosilicate glass matrix, wherein the glass/ceramic composite is typically MACOR. Throughout this patent application, the term "MACOR" shall be understood as referring to a glass/ceramic composite, in particular a fluorphlogopite mica in a borosilicate glass matrix, preferably with the following typical composition: 40% to 50% silica (SiO₂) and/or 10% to 20% magnesium oxide (MgO) and/or 10% to 20% aluminum oxide (Al₂O₃) and/or 5% to 15% potassium oxide (K₂O), and/or 5% to 10% boron trioxide (B₂O₃) and/or 1% to 8% fluorine (F). In typical embodiments, the glass/ceramic composite has the before-mentioned composition and is not necessarily referred to as MACOR.

In typical embodiments, the material MACOR in the sense of this application shall refer to a glass/ceramic composite, in particular a fluorphlogopite mica in a borosilicate glass matrix, with the following typical composition: approximately 46% silica (SiO₂), approximately 17% magnesium oxide (MgO), approximately 16% aluminum oxide (Al₂O₃), approximately 10% potassium oxide (K₂O), approximately 7% boron trioxide (B₂O₃) and approximately 4% fluorine (F). Throughout this application, the expression "approximately" shall be understood as referring to a tolerance of ±20%, preferably ±10%.

In typical embodiments, the material MACOR stands for the machinable glass/ceramic composite material available under the trademark "MACOR^{®}", made available by Corning International. In this case, MACOR is basically a fluorphlogopite mica in a borosilicate glass matrix with a typical composition of 46% silica (SiO₂), 17% magnesium oxide (MgO), 16% aluminum oxide (Al₂O₃), 10% potassium oxide (K₂O), 7% boron trioxide (B₂O₃) and 4% fluorine (F). However, in this patent application, the term "MACOR" does not necessarily relate to this particular type of MACOR but can have any of the compositions explained above. In other words: "MACOR" in the sense of this patent application is not a trademark but a glass/ceramic composite with any of the above-mentioned compositions.

In typical embodiments, the fuel cell portion 4 and/or the fuel cell system has/have an electric output power of 1000 W or less. In typical embodiments, the fuel cell portion 4 and/or the fuel cell system has/have an electric output power of 100 W ±10%, wherein the negative pressure inside the vacuum chamber 22 typically equals between 50 and 200 mbar, preferably approximately 100 mbar, preferably 100 mbar ±10%. In typical embodiments, the fuel cell portion 4 and/or the fuel cell system has/have an electric output power of 20 W ±10%, wherein the negative pressure inside the vacuum chamber 22 typically equals between 1 and 100 mbar, preferably approximately 5 mbar, preferably 5 mbar ±10%. In typical embodiments, the pump system and/or the vacuum pump is configured to maintain the pressure inside the vacuum housing 22 within these pressure ranges. In typical embodiments, a temperature of the first zone during operation of the fuel cell system equals between 300°C and 800°C, preferably approximately 650°C, preferably 650°C ±10%.

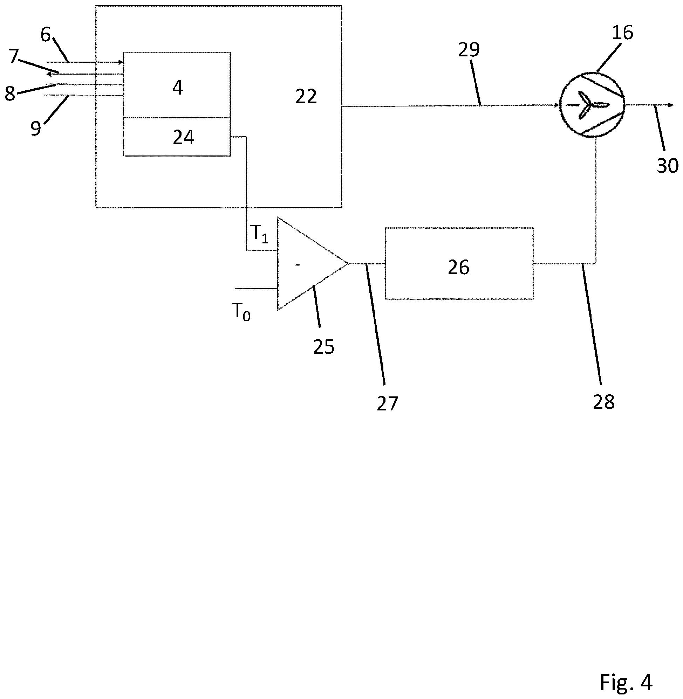

Figure 4 shows a schematic block diagram of a fuel cell system according to one preferred embodiment. The fuel cell system first of all comprises a reaction area 4 also referred to as fuel cell portion 4. The fuel cell system furthermore comprises an air-and-gas inlet 6 as well as an air outlet 7. Through the air-and-gas inlet 6, the fuel cell portion 4 is supplied with fuel and air. Even though the air-and-gas inlet 6 is shown as one single alimentation, it is possible that in certain embodiments the air-and-gas inlet 6 actually comprises a multitude of channels, for example one channel for feeding air into the fuel cell portion 4 and another channel for feeding a mixture of air and gas and/or air and fuel into the fuel cell portion 4. The reacted compound that is being created as a result of the electrochemical reaction in the fuel cell portion 4 is guided out of the fuel cell portion 4 through the air outlet 7. The fuel cell system in Figure 4 further comprises a positive potential port 8 and a negative potential port 9 between which an electrical potential is present when the fuel cell system is working. The fuel cell portion 4 is arranged inside a vacuum chamber 22. Inside this vacuum chamber 22 is furthermore arranged a temperature sensor 24 which is configured to sense the current temperature inside the vacuum chamber 22 and/or the current temperature of the reaction area 4 during operation of the fuel cell system. The fuel cell system furthermore comprises a temperature comparator 25, a pressure regulator 26 as well as a vacuum pump 16. The temperature comparator 25 has as inputs a reaction area target temperature T₀ and a reaction area actual temperature T₁. During operation of the fuel cell system shown in Figure 4, the temperature comparator 25 continuously compares the reaction area actual temperature T₁ with the reaction area target temperature T₀ and gives a temperature difference 27 as an output. This temperature difference 27 is fed into the pressure regulator 26. Based on this temperature difference 27, the pressure regulator 26 calculates, preferably continuously, whether a pumping instruction 28 has to be sent to the vacuum pump 16. In typical embodiments, the pressure regulator 26 determines a value of the pumping instruction 28 to be sent to the vacuum pump 16. The vacuum pump 16 is activated (or deactivated, as the case may be) based on the pumping instruction 28 received from the pressure regulator 26. If the vacuum pump 16 is in operation (for example because it has received a corresponding pumping instruction 28 by the pressure regulator 26), pump incoming air 29 is being sucked out of the vacuum chamber 22 and into the vacuum pump 16 and leaves the vacuum pump 16 as pump outcoming air 30. In this manner, the temperature inside the vacuum chamber 22 can be controlled and/or regulated continuously by means of the described adaptation of the pressure inside the vacuum chamber 22.

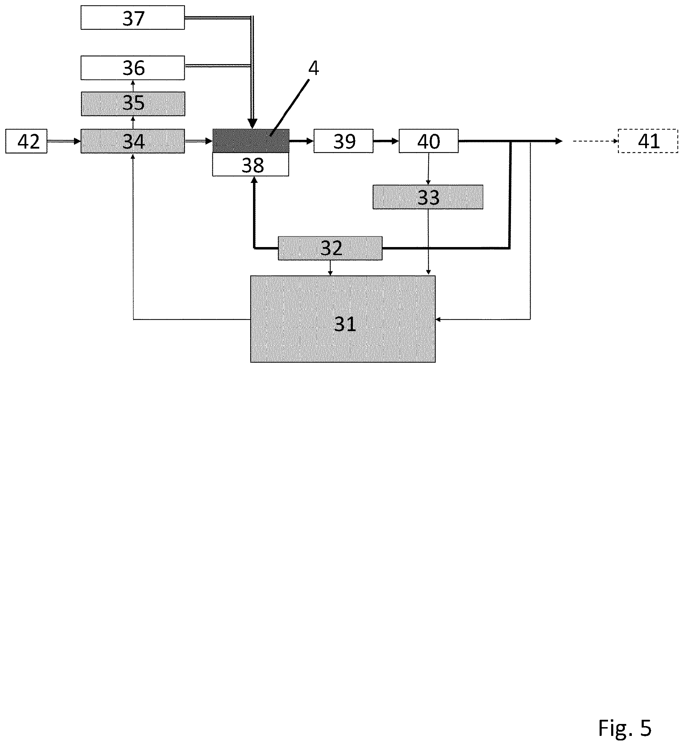

Figure 5 now shows another schematic block diagram of a preferred embodiment of a fuel cell system. Also the embodiment shown in Figure 5 shows a reaction area/fuel cell portion 4. The fuel cell system shown in Figure 5 furthermore shows a control system, which is actually a distributed control system, i.e. a control system comprising different components, namely a main controller 31, a heat regulator 32, a storage system controller 33 for controlling an electricity storing system, wherein the electricity storing system for example comprises a battery and/or a super capacitor, a fuel regulator 34 as well as an air regulator 35. In typical embodiments, one or more of these distributed components of the control system are implemented by means of computer programme code. The fuel cell system shown in Figure 5 furthermore comprises a first air pump 36 and a second air pump 37. The first air pump 36 is used to pump air and/or a mixture of air and fuel or gas into the reaction area 4. The first air pump 36 receives instructions on the amount(s) of air and/or gas or fuel to be pumped into the reaction area 4 by the air regulator 35. The air regulator 35 itself receives its instructions from the fuel regulator 34 to which it is connected. The fuel regulator 34 sends instructions to the air regulator 35 and also calculates and distributes fuel 42 and/or a mixture of fuel and air to the reaction area 4. The fuel cell system depicted in Figure 5 furthermore comprises a heater 38, which is typically a resistive heater, configured to heat the reaction area 4 of the fuel cell system if needed. The fuel cell system in Figure 5 furthermore comprises a DC/DC converter 39 and a battery 40. Shown in Figure 5 is also a load 41. The load 41 can in principle be any kind of electric load. In some embodiments, the electric load 41 is part of the fuel cell system. However, it is also possible that the load 41 does not form part of the fuel cell system.

The interplay of the different components of the fuel cell system shown in Figure 5 is typically as follows: When the fuel cell system shown in Figure 5 is operating, the current supplied by the electrochemical reaction in the fuel cell portion 4 is first of all fed into the DC/DC converter 39. From this DC/DC converter 39, the current is fed into the battery 40. The load 41 is therefore not directly connected to the output of the fuel cell portion 4 of the fuel cell system but to the battery 40, which is acting as a buffer. The battery controller 33 receives information from the battery 40 continuously, for example information concerning the actual charge level of the battery 40 at a given moment in time. The battery controller 33 itself outputs information to the main controller 31. Like this, the battery controller 33 can for example inform the main controller 31 if there is a risk for a deep discharge of the battery 40. If this is the case, the main controller 31 can then for example send instructions to the fuel regulator 34 which tell the fuel regulator 34 to regulate fuel and air supply to the fuel cell portion 4 in such a way that the fuel cell portion 4 produces enough electrical current for recharging the battery 40 in a way that avoids the deep discharge. The main controller 31 further receives information from the heat regulator 32. The heat regulator 32 is connected to the heater 38 and in typical embodiments also to the temperature sensor 24 (not shown in Figure 5 but shown in Figure 4) and therefore has information about the actual temperature of the fuel cell portion 4. The heat regulator 32 passes this information on to the main controller 31 which can process this information and, if necessary, instruct the fuel regulator 34 to take appropriate measures for adapting the fuel flow and/or air flow to the fuel cell portion 4 in such a way that the operating temperature of the fuel cell portion 4 is either increased or decreased, as the requirement may be. In addition to information from the heat regulator 32 and the battery controller 33, the main controller 31 also receives input information about the current power load of the fuel cell system, namely the power that is being drawn by the load 41 at a given moment in time. In typical embodiments, the main controller 31 uses this information about the power load drawn by the load 41 to continuously calculate a fixed-period-of-time-average, for example a one-hour average, of the power load. The main controller 31 typically uses this fixed-period-of-time-average to set the fuel regulator 34 (and thereby indirectly also the air regulator 35) such that the fuel regulator 34 and the air regulator 35 send fuel and/or gas and/or air into the fuel cell portion 4 of the fuel cell system in such a way that the electrochemical reaction in the fuel cell portion 4 is operating at a level which produces at least approximately the exact current which is needed so that the fixed-period-of-time-average of the power load can be supplied. In other words: In typical embodiments, the operation of the fuel cell system is optimised on the fixed-period-of-time-average of the power load calculated by the main controller 31 based on the information that the main controller 31 is continuously receiving from the power output of the fuel cell system. Optimising (or in other words: configuring) the operation of the fuel cell system on this fixed-period-of-time-average of the power load rather than on, for example, peak power spikes drawn by the load 41 has the advantage of minimizing the need for rapid and/or too important changes in system configuration (for example rapid mass flow changes and/or rapid temperature changes and/or rapid pressure changes), thereby typically also improving the efficiency and/or lifetime of the fuel cell system.

In particular embodiments, in particular for low output voltage fuel cells, a DC/DC converter functioning as a current source is employed. Such a DC/DC converter will push the electrical charges through into the battery and the output voltage is set by the battery itself. This architecture allows to have higher efficiency for low input voltage than standard DC/DC converters.

The heat regulator 32 is also connected to the output of the battery 40 of the fuel cell system. The reason for that is that this allows the heat regulator 32 to draw power from the battery during start-up of the fuel cell. Like this, the heat regulator 32 can use the power from the battery 40 to heat up the fuel cell portion 4 by means of the resistive heater 38. This facilitates the start-up of the fuel cell portion 4 and thereby the entire fuel cell system. The combination of the fuel regulator 34, the air regulator 35, the first air pump 36 and the second air pump 37 is also referred to as the "mass flow controllers". The second air pump 37 typically introduces a constant air flow into the fuel cell portion 4. The first air pump 36 typically induces a variable airflow and/or gas flow into the fuel cell portion 4, depending on which intensity of current production is currently desired by the fuel cell system.

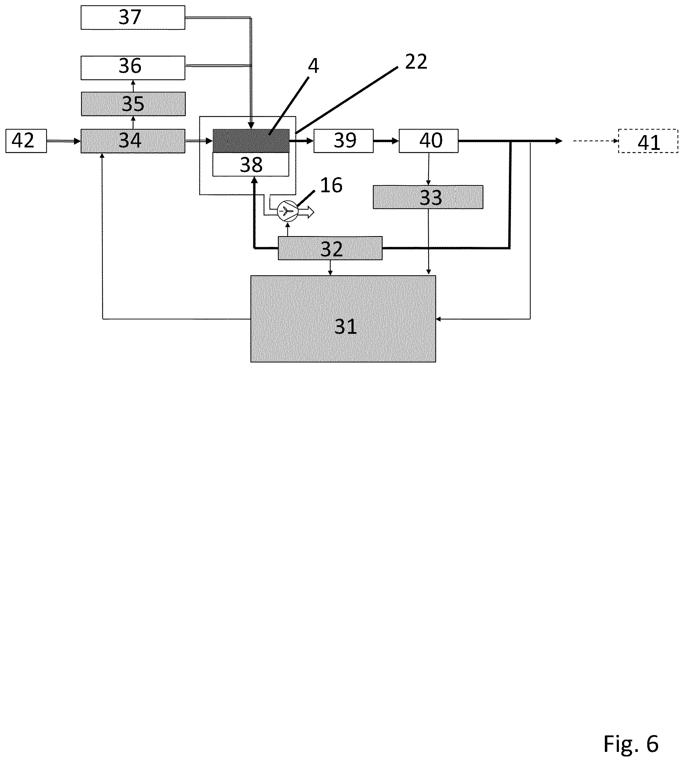

In general, variable airflow allows two things: firstly, by varying the fuel with the same proportion, it is possible to vary the production current and match the need of the load. Secondly, it is possible to change the fuel/air mixing ratio which will allow to change the proportion of compounds (H₂, CO, CO₂, H₂O) generating during the hydrocarbons reforming. Changing this proportion in function of the electrical load plugged onto the fuel cell system allows to make sure that no carbon deposition or oxidation is possible. Figure 6 now shows a schematic block diagram of another preferred embodiment of the fuel cell system. The embodiment shown in Figure 6 corresponds to the embodiment shown in Figure 5 with the difference that a vacuum chamber 22 is present in the fuel cell system, the vacuum chamber 22 comprising the fuel cell portion 4 and the heater 38. Connected to the vacuum chamber 22 is also a vacuum pump 16 which is also connected to the heat regulator 32. In this embodiment, the heat regulator 32 can comprise the pressure regulator 26. In other embodiments, the pressure regulator 26 is integrated in the main controller 31, preferably by means of computer programme code.

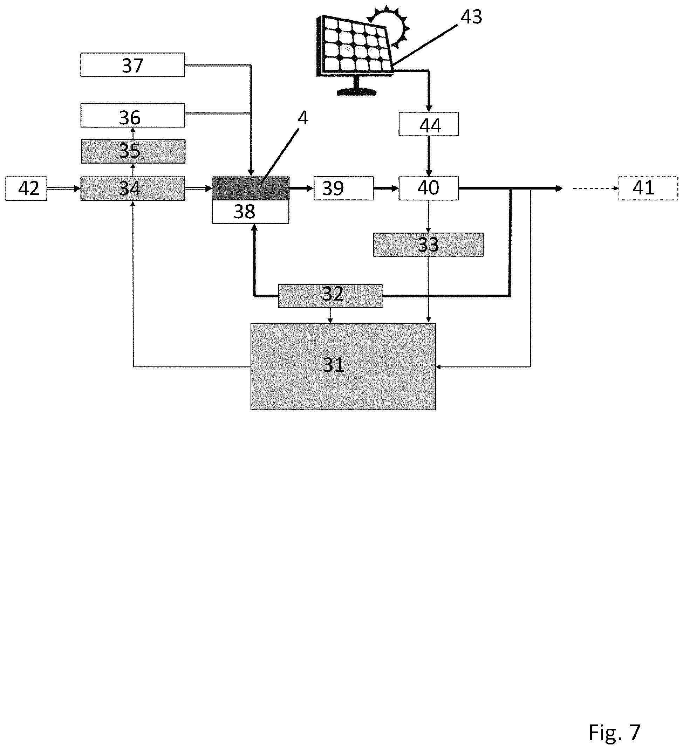

Figure 7 shows a schematic block diagram of another preferred embodiment of the fuel cell system. The fuel cell system in Figure 7 corresponds almost exactly to the embodiment shown in Figure 5, the sole exception being that the fuel cell system in Figure 7 also comprises a photovoltaic system (PV system) 43 which is connected to the battery 40 through a PV system DC/DC converter 44. By adding a PV system 43 to the fuel cell system, the fuel cell system becomes an energy supply system for the load 41 wherein electricity can either be provided by the PV system 43, by the fuel cell portion 4 and/or by a combination of both of them. In general, the PV system could also be replaced by any other source of electricity or by a combination of different electricity sources.

In a typical embodiment, the control system of the fuel cell and/or the energy supply system comprises a low-power controller that is configured to control and optimize the communication between different units and/or components of the fuel cell system and/or the energy supply system in order to ensure high overall system efficiency. In typical embodiments, the control system is such a low-power controller, in particular a low-power controller with a maximum power consumption of 20 Watt +/-10%, preferably with a maximum power consumption of 10 Watt +/-10%, more preferably with a maximum power consumption of 1 Watt +/-10%.

In typical embodiments, the low-power controller establishes a closed-loop thermal and electrical management system for optimizing the efficiency of the fuel cell system and/or the energy supply system. The fuel cell portion 4 at the core of such systems is typically equipped with temperature sensor 24 to measure the operating temperature of this fuel cell portion 4. The fuel cell system and/or the energy supply system typically comprise(s) one or more power converters, for example the above-mentioned DC/DC converters 39, 44, which are coupled to the power output(s) of the fuel cell portion 4 and/or of the PV system 43, respectively, so that power is transferred from the fuel cell portion 4 and/or from the PV system 43 to an electrical buffer, for example a battery, such as the above-mentioned battery 40. In typical embodiments, the battery is used to absorb spikes of power consumption coming from the load. This allows to optimize the fuel cell output power with respect to the average power consumption of the load device and not the peak power.

In typical embodiments, the main controller 31 is coupled to the fuel cell portion 4, to the power output of the overall system, to the temperature sensor 24 and to the flow controllers 34, 35. The main controller 31 is typically configured to operate a power control loop, having the measured power consumption of the battery 40 for the last one hour (or another fixed period of time) as input and estimating the power consumption in the next one hour (or another fixed period of time). The output of the main controller 31 is typically used to adjust the flow into the fuel cell portion 4 by using the fuel regulator 34 and/or the air regulator 35 and/or the pump 36, and/or the pump 37 to match the required power that has to be provided by the fuel cell portion 4, in particular the required electrical power that has to be provided by the electrochemical reaction taking place in the fuel cell portion 4. In typical embodiments, the fuel cell system is configured to maintain a fuel utilization of 50% to 90%, preferably 70%-80% and at the same time maintain the carbon-to-oxygen ratio in the range between 0.5 and 1.2, preferably between 0.8 to 1.

In typical embodiments, the flow of air and/or gas and/or fuel (or in other words: the mass flow) that is administered to the fuel cell portion 4 during the operation of the fuel cell system varies over time depending on the actual operating parameters of the fuel cell system. In other words: the mass flow is not necessarily constant but changes over time when the fuel cell system is in operation. The fuel cell system is typically configured in such a way that such mass flow variations over time can be carried out, for example by adapting the operation of the fuel regulator 34 and/or the air regulator 35 and/or the pump 36, and/or the pump 37 to the actual temperature of the first zone 1 and/or the actual pressure inside the vacuum chamber 22 and/or to the actual load and/or to the fixed-period-of-time-average load and/or to a battery voltage. The change of the flow will typically change the amount of heat that is generated by the fuel cell portion 4 (including the reformer). In typical embodiments, the level of thermal insulation (e.g., the pressure inside the vacuum chamber 22) and/or the system heating (e.g. the activity of the heater 38) are adapted to the change of temperature caused by the amended mass flow by means of a heat regulation loop and/or by means of the heat regulator 32 which is typically interconnected between a power output of the fuel cell system and the heater 38 and the main controller 31, as shown for example in Figure 5.

The control system and/or the main controller is/are not only limited to controlling the operation of ta fuel cell coupled with a battery, but it/they can also accommodate other power generators such as photovoltaic modules.

The invention is not limited to the preferred embodiments described here. The scope of protection is defined by the claims.

Furthermore, the following claims are hereby incorporated into the Description of Preferred Embodiments, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

Furthermore, all embodiments described in the previous paragraphs can in principle be combined with each other, unless stated otherwise. It is further to be noted that methods disclosed in the specification or in the claims may be implemented by a device having means for performing each of the respective acts of these methods.

### Reference list

- 1: First zone
- 2: Second zone
- 3: Decoupling structure
- 4: Reaction area/Fuel cell portion
- 5: Bridge connection
- 6: Air-and-gas inlet
- 7: Air outlet
- 8: Positive potential port
- 9: Negative potential port
- 10: Glass sealing (of main body of the fuel cell system)
- 11: Reflective coating (of main body of the fuel cell system)
- 12: Vacuum housing
- 13: Reflective coating (of vacuum housing)
- 14: Sealing ring
- 15: Closure plate
- 16: Vacuum pump
- 17: Vacuum hose
- 18: Pressure control outlet
- 19: Outlet closure tip
- 20: Outer wall (of vacuum housing in double-wall design)
- 21: Inner wall (of vacuum housing in double-wall design)
- 22: Vacuum chamber
- 23: Additional chamber
- 24: Temperature sensor
- 25: Temperature comparator
- 26: Pressure regulator
- 27: Temperature difference
- 28: Pumping instruction
- 29: Pump incoming air
- 30: Pump outcoming air
- 31: Main controller
- 32: Heat regulator
- 33: Battery controller
- 34: Fuel regulator
- 35: Air regulator
- 36: First air pump
- 37: Second air pump
- 38: Heater
- 39: DC/DC converter
- 40: Battery
- 41: Load
- 42: Fuel
- 43: Solar panel
- 44: PV system DC/DC converter

- T₀: Reaction area target temperature
- T₁: Reaction area actual temperature

## Claims

1. Fuel cell system comprising a first zone (1) and a second zone (2),
- wherein the first zone (1) comprises a reaction area (4),
- wherein the second zone (2) comprises a fluidic connection (6, 7),
- wherein the fuel cell system comprises a decoupling structure (3) located between the first zone (1) and the second zone (2),
- wherein the decoupling structure (3) is configured to achieve an at least partial thermal decoupling between the first zone (1) and the second zone (2),
**characterized in that**
the fuel cell system is configured to maintain a temperature of the first zone (1) essentially stable during an operation of the fuel cell system.

2. Fuel cell system according to claim 1, **characterized in that** the fuel cell system is configured to keep the second zone (2), in particular the fluidic connection (6, 7), under 150°C, preferably under 85°C, more preferably approximately at ambient temperature during the operation of the fuel cell system.

3. Fuel cell system according to any of the previous claims, **characterized in that** the fuel cell system comprises a temperature control means, wherein the temperature control means is configured in such a way that it can keep the temperature of the first zone essentially stable, preferably at a desired operation temperature, during the operation of the fuel cell system, wherein the temperature control means is preferably furthermore configured such that it cannot actively influence a temperature of the second zone during the operation of the fuel cell system.

4. Fuel cell system according to any of the previous claims, **characterized in that** the fuel cell system comprises a vacuum housing (12), wherein the first zone (1) is preferably at least partly encapsulated in the vacuum housing (12) and/or wherein the decoupling structure (3) is preferably at least partly encapsulated in the vacuum housing (12) and/or wherein the second zone (2) is preferably located outside the vacuum housing (12).

5. Fuel cell system according to any of the previous claims, **characterized in that** the fuel cell system, preferably the vacuum housing (12), comprises a reflective coating (13).

6. Fuel cell system according to any of the previous claims, **characterized in that** the fuel cell system comprises a control system configured
- to modulate a power output of the fuel cell system, and/or
- to modulate a temperature of the fuel cell system, especially of the first zone (1), and/or
- to modulate a pressure inside the vacuum housing (12), and/or
- to control the temperature of the first zone (1).

7. Fuel cell system according to claim 6, **characterized in that**
- the control system is configured to ensure that an essentially constant electrical power is drawn from the fuel cell system, in particular from a fuel cell portion (4) of the fuel cell system, wherein the fuel cell portion (4) comprises the reaction area (4), and/or
- the control system is configured to adapt a fluid intake of the fuel cell system to an electrical power output of the fuel cell system, and/or
- the control system is configured to adapt a pressure inside the vacuum housing (12) to an ambient temperature and/or to a current heat generation of the fuel cell portion (4) and/or of the fuel cell system.

8. Fuel cell system according to any of the claims 3 to 7, **characterized in that** the vacuum housing (12) comprises a pressure control outlet (18) through which a pressure inside the vacuum housing (12) can be controlled, wherein the pressure control outlet (18) is preferably significantly smaller than a main part of the vacuum housing and/or the pressure control outlet (18) preferably has a pointed form.

9. Fuel cell system according to any of the previous claims, **characterized in that** the fuel cell system is configured in such a way that a pump system can be connected to the fuel cell system, in particular to the vacuum housing (12), for controlling the pressure inside the vacuum housing (12), wherein the pressure control outlet (18) is preferably configured in such a way that the pump system can be connected to the pressure control outlet (18).

10. Fuel cell system according to any of the previous claims, **characterized in that** the first zone (1) and/or the second zone (2) and/or the decoupling structure (3) and/or the vacuum housing (12) and/or any other component of the fuel cell system and/or the entire fuel cell system is/are made essentially exclusively of materials with thermal expansion coefficients between 8 ppm/K and 12 ppm/K.

11. Fuel cell system according to any of the previous claims, **characterized in that**
- the first zone (1), the decoupling structure (3) and the second zone (2) together form a main body of the fuel cell system, wherein the main body typically has a beam-shaped form, and/or
- the decoupling structure (3) comprises a bridge connection (5), wherein the bridge connection (5) typically comprises a multitude of bridge strips, wherein
- an effective width of the bridge connection (5) equals 1 to 50%, preferably 1 to 30%, more preferably 1 to 20% of a (maximum) width of the main body of the fuel cell, and/or
- the decoupling structure (3) comprises a multitude of embedded microfluidic channels passing through the decoupling structure (3), preferably through the bridge connection (5), from the first zone (1) to the second zone (2), wherein each channel typically has a width between 0.05 mm and 10 mm, preferably between 0.1 mm and 5 mm, more preferably between 0.1 mm and 2 mm.

12. Method for manufacturing a fuel cell system according to any of the previous claims, wherein the method comprises the steps:
- placing a main body comprising the first zone (1), the second zone (2) and the decoupling structure (3) at least partly inside a vacuum housing (12),
- connecting the vacuum housing (12) to the main body by means of a closure plate (15) and/or a sealing ring (14), and
- closing a pressure control outlet (18) of the vacuum housing (12) either by arranging a vacuum pump (16) on it or by heating it up such that an outlet closure tip (19) is formed.

13. Method for regulating an operating temperature of a fuel cell system, preferably a fuel cell system according to any of the claims 1 to 11, wherein the method comprises a process of temperature control, wherein the process of temperature control preferably comprises:
- an air regulation process, and/or
- a fuel regulation process, and/or
- a pressure regulation process, and/or
- an energy production regulation process, and/or
- an energy storage process, and/or
- a gas flow regulation process.

14. Computer programme comprising instructions which, when the programme is executed by a computer, cause the computer to carry out a method according to claim 13.

15. Computer-readable medium comprising computer programme code for carrying out a method according to claim 13 and/or comprising a computer programme according to claim 14.
